# EUROPEAN PATENT SPECIFICATION

(11) **EP 0 682 196 B1**
(45) Date of publication and mention of the grant of the patent: **03.11.1999**
(21) Application number: 95106470.8
(22) Date of filing: 28.04.1995
(51) Int. Cl.: F16H 63/30, F16D 25/0638

(54) **Automatic transmission**
Automatisches Getriebe
Transmission automatique

(30) Priority: 09.05.1994 JP 11746094
(43) Date of publication of application: 15.11.1995
(73) Proprietor: AISIN AW CO., LTD., Anjo-shi Aichi-ken (JP)
(72) Inventor: Tsukamoto, Kazumasa, Anjo-shi, Aichi-ken (JP); Hayabuchi, Masahiro, Anjo-shi, Aichi-ken (JP); Kadotani, Masanori, Anjo-shi, Aichi-ken (JP); Kasuya, Satoru, Anjo-shi, Aichi-ken (JP)
(74) Representative: VOSSIUS & PARTNER

(56) References cited:
- DE-A- 3 838 708
- DE-A- 3 838 865
- US-A- 2 919 778
- US-A- 4 044 869
- US-A- 5 019 022

## Description

The present invention relates to an automatic transmission and, more particularly, to a hydraulic servo unit for applying/releasing the frictional engagement elements of the automatic transmission.

In case the cylinders of hydraulic servo units for applying/releasing two frictional engagement elements of an automatic transmission are arranged in-between in a back-to-back relation to each other, it is customary (as referred to JP-A-8851/1983 & US 4 480 734 A) that return springs for pushing back the pistons of the hydraulic servo units are so arranged by making use of the spaces which are formed in the inner circumferences of the individual frictional engagement elements that their one ends are connected to the cylinders whereas their other ends are connected to the pistons.

According to this arrangement, the frictional engagement elements and the return springs are arranged to have their inner and outer circumferences overlapped in substantially the same positions in the axial direction of the automatic transmission. As a result, this arrangement is effective for avoiding the increase in the axial size, as viewed only from the relation between the frictional engagement elements and their hydraulic servo units. However, this arrangement cannot always be said to be rational if it is considered in the entirety of the automatic transmission including the arranging relation to the shift elements such as the planetary gears to be connected to those frictional engagement elements.

In the pursuit of rational arrangements such as a multistage for avoiding the increase in the size of an automatic transmission, for achieving compactness for improving the mountability of the automatic transmission, or a correspondinlgy greater compactness of the components, it would be effective to suppress the increase in the axial size if the shift elements such as planetary gears could be arranged in the inner circumference of one frictional engagement element. However, the hydraulic servo unit arranged with the shift elements has its inner circumferential space occupied by the shift elements so that it cannot retain the space for being arranged with the return spring, as contrary to the aforementioned arrangement.

US-A-5 019 022 discloses a speed change arrangement for vehicles having several gear pairs and a planet gear engaged with at least one gear pair to offer at least one additional transmission stage. The arrangement further comprises an input element an output element, and an additional element, connectable in a first shift position with a surrounding housing and in a second shift position with one of the other elements.

The present invention contemplates to solve such problem and has an object to improve the piston-cylinder construction in a hydraulic servo unit having cylinders arranged back-to-back in association with two frictional engagement elements, so that not only the return springs of two hydraulic servo units but also the shift elements may be arranged on the inner circumferential side of the frictional engagement element.

Another object of the present invention is to provide a piston-cylinder mechanism capable of arranging the return springs of two hydraulic servo units in the inner circumferential space of one frictional engagement element.

Still another object of the present invention is to provide an integrated arrangement of the return springs of two hydraulic servo units while suppressing the radial size by making use of the inner circumferential space of one frictional engagement element.

A further object of the present invention is to unite the return springs of two hydraulic servo units.

A further object of the present invention is to provide a piston-cylinder mechanism which has its one hydraulic servo unit given a sufficiently larger capacity than that of its other hydraulic servo unit.

In order to achieve the above-specified objects, 'according to a feature of the present invention, there is provided an automatic transmission of the present invention comprising: a first frictional engagement element and a second frictional engagement element juxtaposed in the axial direction; a first hydraulic servo unit including a first cylinder having a side wall portion interposed between the two frictional engagement elements; and a second hydraulic servo unit including a second cylinder having a side wall portion interposed between the two frictional engagement elements, wherein the first cylinder further has a first outer circumferential cylinder portion extending from the outer circumference of the side wall portion thereof toward the first frictional engagement element, and a first inner circumferential cylinder portion extending from the inner circumference thereof toward the first frictional engagement element, wherein the first hydraulic servo unit further includes: a first piston having its inner and outer circumferences so slidably supported by the outer circumferential cylinder portion and the first inner circumferential cylinder portion of the first cylinder as to slide in the axial direction thereby to push the first frictional engagement element; and a first return spring arranged in the inner circumference of the first frictional engagement element for pushing back the first piston, wherein the second cylinder further has a second outer circumferential cylinder portion extending from the outer circumference of the side wall portion thereof toward the second frictional engagement element, and an inner circumferential cylinder portion made common with the first inner circumferential cylinder portion, and wherein the second hydraulic servo unit further includes: a second piston having its larger-diameter outer circumferential portion and smaller-diameter outer circumferential portion so slidably supported by the inner circumference of the second outer circumferential cylinder portion and the inner circumference of the first inner circumferential cylinder portion as to slide in the axial direction thereby to push the second frictional engagement element; and a second return spring arranged in the inner circumference of the first frictional engagement element for pushing back the second piston.

According to another feature of the present invention, the first inner circumferential cylinder portion has a first extension portion for supporting the inner circumference of the first piston, and a second extension portion extending from the first extension portion through a connection portion to the inner circumference of the first frictional engagement element, and the first return spring and the second return spring are arranged around the outer circumference of the second extension portion.

According to still another feature of the present invention, the first return spring and the second return spring are arranged to have their one ends connected back-to-back to the first inner circumferential cylinder portion, and the first return spring has its other end connected to the first piston whereas the second return spring has its other end connected to the second piston.

According to a further feature of the present invention, the first return spring and the second return spring are united to have their one end connected to the first piston and its other end connected to the second piston.

According to a further feature of the present invention, the second frictional engagement element is one which has a larger capacity than that of the first frictional engagement element so that it is applied at a lower gear stage than that of the first frictional engagement element.

According to the above-specified features of the present invention, the space for arranging the shift elements such as the planetary gears can be retained in the inner circumference of the frictional engagement element thereby to make the automatic transmission compact.

Next, in addition to the aforementioned effect of a compact automatic transmission, there can be attained another effect of reducing the number of assembling steps by the united arrangement of the return springs of the two hydraulic servo units.

Moreover, it is possible to realize a construction in which the return springs of the two hydraulic servo units are united and arranged in the inner circumferential portion of one frictional engagement element without being followed by an increase in the radial size.

Still moreover, there can be attained as an additional one an effect of simplifying a piston pushing-back mechanism and reducing the number of assembling steps by uniting the return springs of the two hydraulic servo units.

Furthermore, it is possible to provide an automatic transmission having a rational arrangement of hydraulic servo units, which is enabled to apply a higher pushing force to the frictional engagement element at a lower speed stage requiring a higher torque capacity by effectively applying the features of the piston-cylinder mechanism, as achieved from the aforementioned individual constructions, to the shifting operations.
Fig. 1 is a section of an axial portion and shows only the end faces of partial members of an automatic transmission according to a first embodiment of the present invention;
Fig. 2 is a skeleton diagram showing the gear train of the aforementioned automatic transmission in the transmission state at a 1st speed;
Fig. 3 is a skeleton diagram showing the transmission state of the aforementioned gear train at a 2nd speed;
Fig. 4 is a skeleton diagram showing the transmission state of the aforementioned gear train at a 3rd speed;
Fig. 5 is an operation table enumerating the application/release of frictional engagement elements at the individual gear stages of the aforementioned automatic transmission; and
Fig. 6 is an enlarged section of an axial portion and presents only the end face of a partial member of an automatic transmission according to a second embodiment of the present invention.

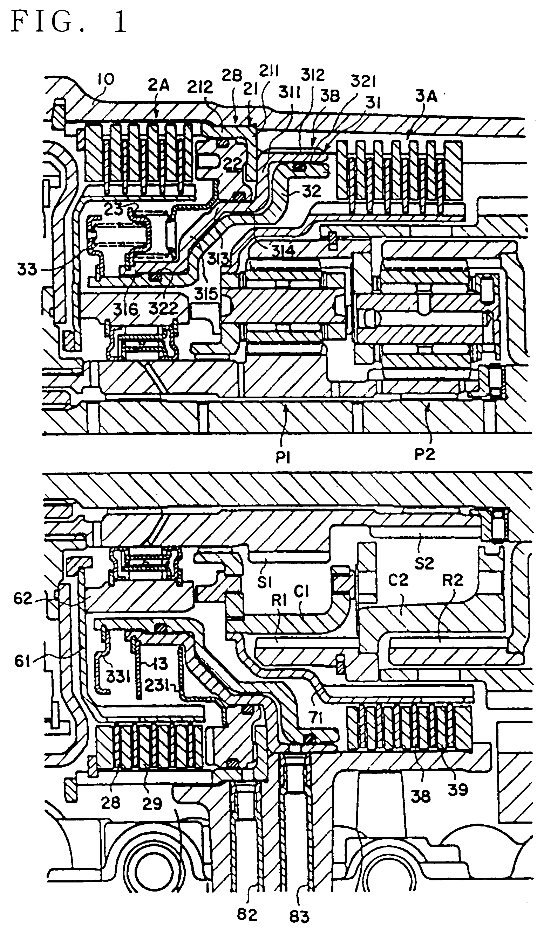

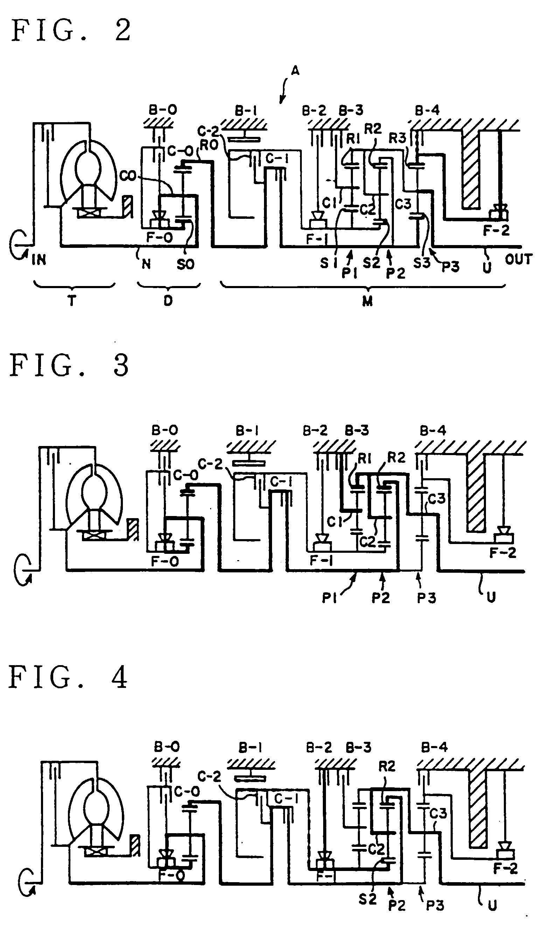

An embodiment of the present invention will be described in the following with reference to the accompanying drawings. Figs. 1 to 6 show a first embodiment of the present invention. First of all, the schematic construction of the entirety of an automatic transmission will be described in the following. As shown in Fig. 2, this automatic transmission A is constructed to have five speeds by combining an auxiliary transmission D including a pre-overdrive planetary gear unit and a main transmission mechanism M of four forward and one reverse speeds including three simply-connected planetary gear trains, and is equipped with a torque converter T having a lockup clutch.

The auxiliary transmission mechanism D is equipped with: a one-way clutch F-0 associated with a sun gear S0, a carrier C0 and a ring gear R0; a multi-disc clutch C-0 in parallel with the one-way clutch F-0; and a multi-disc brake B-0 in series with the multidisc clutch C-0. On the other hand, the main transmission mechanism M is equipped with three sets of simply connected gear units P1 to P3 composed of shift elements including sun gears Sl to S3, carriers C1 to C3 and ring gears R1 to R3 simply connected suitably in series. In association with the shift elements of the individual gear units, there are arranged multi-disc clutches C-1 and C-2, a band brake B-1, multi-disc brakes B-2 to B-4, and one-way clutches F-1 and F-2. Incidentally, each of the clutches and brakes is equipped with a hydraulic servo mechanism which is composed of a piston-cylinder for applying/ releasing those frictional engagement elements by controlling the servo oil pressure by a not-shown hydraulic control unit.

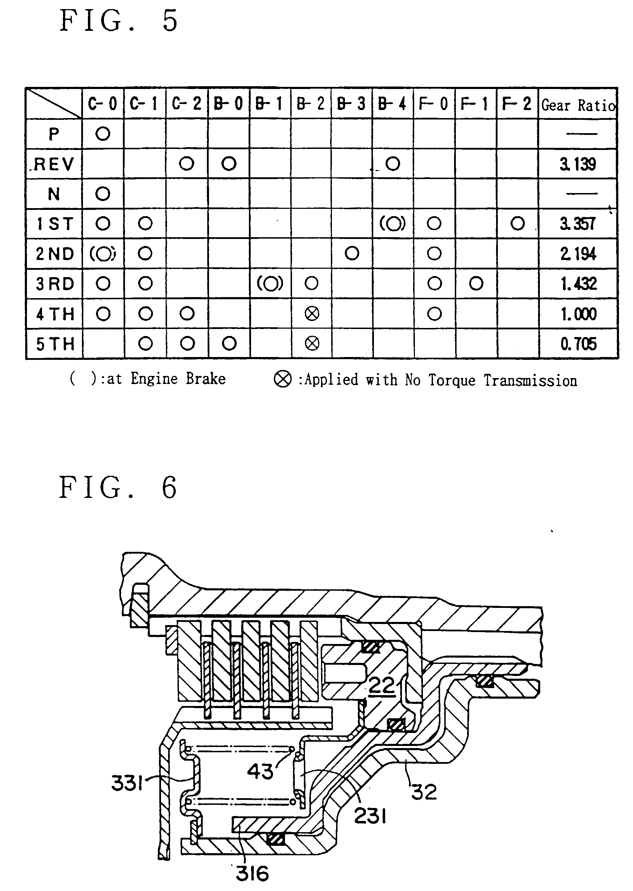

In this transmission, the input rotation of the not-shown engine is transmitted to the input shaft N of the auxiliary transmission mechanism D through the torque converter T. Moreover, with the clutch C-0 being applied to directly connect the auxiliary transmission mechanism D and with the clutch C-1 of the main transmission mechanism M being applied but all the remaining brakes being released (with reference to the operation table of Fig. 5 indicating the application at O ), the rotation of the input shaft N is inputted to the sun gear S3 of the gear unit P3, as shown in Fig. 2, to block the reverse rotation of the ring gear R3 by the one-way clutch F-2 until it is outputted as a 1st speed rotation from the carrier C3 to an output shaft U.

Next, the 2nd speed rotation is achieved when the auxiliary transmission mechanism D is directly connected and, as shown in Fig. 3, when the clutch C-1 and the brake B-3 are applied (as should be referred to Fig. 5). At this time, the input having entered the ring gear R2 of the gear unit P2 is outputted, with the carrier C1 of the gear unit P1 acting as a reaction element, to the carrier C2 of the gear unit P2 and to the ring gear R1 of the gear unit P1, as directly connected to the carrier C2, and the carrier C3 of the gear unit P3 until it establishes a 2nd speed rotation of the output shaft U.

Moreover, the 3rd speed rotation is also achieved when the auxiliary transmission mechanism D is directly connected and, as shown in Fig. 4, when the clutch C-1 and the brake B-3 are applied (as should be referred to Fig. 5). At this time, the input having entered the ring gear R2 of the gear unit P2 is outputted, with the sun gear S2 acting as a reaction element, to the carrier C2 and and the carrier C3 of the gear unit P3, as connected to the carrier C2, until it establishes a 3rd speed rotation of the output shaft U.

Incidentally, the 4th speed rotation is achieved when the auxiliary transmission mechanism D is directly connected and when both the clutch C-1 and the clutch C-2 are applied. Since, at this time, the input is fed to the ring gear R2 and the sun gear S2, the gear unit P2 comes into the direct connection so that the input rotation is outputted as it is. Moreover, the 5th speed rotation is achieved, with the main transmission mechanism M being in the state of the aforementioned 4th speed rotation, by releasing the clutch C-0 and by applying the brake B-0 to fix the sun gear S0 thereby to accelerate the rotation of the auxiliary transmission mechanism D. On the other hand, the reverse run is achieved, with the auxiliary transmission mechanism D being in the aforementioned state, by applying the clutch C-2 and the brake B-4 of the main transmission mechanism M. At this time, the input having entered the sun gear S2 of the gear unit P2 is outputted as the reverse rotation of the carriers C2 and C3 of the gear units P2 and P3, as uses the ring gear R3 as a reaction element.

In this transmission. the present invention is applied to the brake B-2 and the brake B-3. Specifically, as shown in Fig. 1, there are axially arranged a frictional engagement element (as will be called the first frictional engagement element in the present invention) 2A of the brake B-2 and a frictional engagement element (as will also be called the second frictional engagement element) 3A of the brake B-3. Between these two frictional engagement elements 2A and 3A, there are interposed a side wall portion 211 of a hydraulic servo unit 2B for the brake B-2 and a side wall portion 311 of a hydraulic servo unit (or a second hydraulic servo unit) 3B for the brake B-3. The hydraulic servo unit 2B is composed of: a cylinder (or a first cylinder) 21 having the side wall portion 211, a first outer circumferential cylinder portion 212 extending from the outer circumference of the side wall portion 211 toward the frictional engagement element 2A of the brake B-2, and a first inner circumferential cylinder portion 313 extending front the inner circumference of the side wall portion 311 toward the frictional engagement element 2A; a piston (or a first piston) 22 having its inner and outer circumferences so slidably supported by the first outer circumferential cylinder portion 212 and the first inner circumferential cylinder portion 313 of the cylinder 21 as to slide in the axial direction thereby to push the frictional engagement element 2A; and a return spring (or a first return spring) 23 arranged in the inner circumference of the frictional engagement element 2A for pushing back the piston 22. The hydraulic servo unit 3B is composed of: a cylinder (or a second cylinder) 32 having a second outer circumferential cylinder portion 312 extending from the outer circumference of the side wall portion 311 toward the frictional engagement element 3A of the brake B-3, and an inner circumferential cylinder portion made common with the first inner circumferential cylinder portion 313; a piston (or a second piston) 32 having its larger-diameter outer circumferential portion 321 and smaller-diameter outer circumferential portion 322 so slidably supported by the inner circumference of the second outer circumferential cylinder portion 312 and the inner circumference of the first inner circumferential cylinder portion 313 as to slide in the axial direction to push the second frictional engagement element 3A; and a second return spring 33 arranged in the inner circumference of the frictional engagement element 2A for pushing back the piston 32.

Moreover, the first inner circumferential cylinder portion 313 is composed of a first extension portion 314 supporting the inner circumference of the first piston 22, and a second extension portion 316 extending from the first extending portion 314 through a connection portion 315 to the inner circumference of the first frictional engagement element 2A. The return spring 23 of the brake B-2 and the return spring 33 of the brake B-3 are arranged around the outer circumference of the second extension portion 316.

On the other hand, the return spring 23 of the brake B-2 and the return spring 33 of the brake B-3 are arranged back-to-back to each other in the axial direction and have their one ends connected together to the first inner circumferential cylinder portion 313 (or its second extension portion 316) through a common spring seat 13. The other end of the first return spring 23 is connected to the first piston 22 through a spring seat 231, and the other end of the second return spring 33 is connected to the second piston 32 through a spring seat 331.

In this embodiment, the second frictional engagement element 3A is given a larger capacity, i.e., a higher transmission torque than that of the first frictional engagement element 2A and is applied at a lower gear stage, i.e., the 2nd speed than that of the first frictional engagement element 2A. This is to effectively exploit the fact that the pressure receiving areas of the pistons of the hydraulic servo units opposed to those frictional engagement elements are necessarily made larger at the second frictional engagement element than at the first because of the structural requirements of the aforementioned piston-cylinder mechanism.

The aforementioned individual portions will be described in more detail in the following. The first frictional engagement element 2A comprises hub-side friction members 28 and case side friction members 29 which are alternately laminated in the axial direction. The hub-side friction members 28 have their inner circumferences splined to a brake hub 61, which is fixed on the outer race 62 of the one-way clutch F-1. The case-side friction members 29 are splined to the slits which are formed in the outer circumferential cylinder portion 212 of the cylinder 21. so that they are irrotationally supported in a transmission case 10 through the cylinder 21.

The second frictional engagement element 3A is composed of hub-side friction members 38 and case-side friction members 39 which are alternately laminated in the axial direction. The hub-side friction members 38 have their inner circumferences splined to a brake hub 71, which is fixed on the carrier C1 of the gear unit P1. The case-side friction members 39 are directly splined to the transmission case 10 so that they are irrotationally supported.

The cylinders 21 and 31 of the brake B-2 and the brake B-3 are made of two members which are pressed of steel sheets and welded to each other. One member is formed of: the radially extending side wall portion 211; and the first outer circumferential cylinder portion 212 extending from the outer circumference of the side wall portion 211 toward the frictional engagement element of the brake B-2, and this outer circumferential cylinder portion 212 has its front half slitted. The other member is formed of: the radially extending side wall portion 311; and the second outer circumferential cylinder portion 312 extending from the outer circumference of the side wall portion 311 toward the frictional engagement element of the brake B-3. and is irrotationally supported by fitting its outer circumference splines in the splines of the inner circumference of the transmission case 10. The extension portions 314 and 316, which extend from the inner circumference of the other member toward the first frictional engagement element, are given different diameters and connected through the frusto-conical connection portion 315.

The piston 22 is formed into such an annular shape as has its outer and inner circumferences slidably supported by the inner and outer circumferences of the cylinder 21 and sealed up by O-rings, and the spring seat 231 has its one end supported in abutment against the step portion of the inner circumferential side of the piston 22.

The piston 32 is formed into a cylindrical shape having a sectional shape substantially similar to that of the aforementioned cylinder 31 and has its largest-diameter outer circumference and smallest-diameter outer circumference acting as the sliding faces, with the largest-diameter inner circumference and smallest-diameter inner circumference of the cylinder 31 being individually sealed up by O-rings. Moreover, the spring seat 331 is fixed by a snap ring on the outer circumference of the leading end of the smallest-diameter outer circumference of the cylinder 31, and extends over the leading end of the smallest-diameter portion.

The return spring 23 is composed of a plurality of coil springs which are equally arranged along the shaft circumference. These coil springs are loaded under a predetermined compression by having their one end supported in abutment against the spring seat 13 and their other end caulked on the spring seat 231 while being slightly radially reduced.

The return spring 33 is likewise composed of a plurality of coil springs which are equally arranged along the shaft circumference. These coil springs are loaded under a predetermined compression by having their one end supported in abutment against the recess of the spring seat 13 and their other end caulked on the spring seat 331 while being slightly radially reduced. In this embodiment, the return spring 33 and the return spring 23 are coaxially arranged. Therefore, the winding radii of the two springs are made different while being partially radially overlapped, so as to increase the effective length, as compared with the arranging space. However, these two springs may be alternately arranged along the shaft circumference.

Incidentally, in this example, the two gear units P1 and P2 are arranged at the inner circumferential side of the frictional engagement element 3A of the brake B-3 and the piston-cylinder. In Fig. 1: reference numeral 82 designates a hydraulic feed/drain oil passage of the brake B-2; numeral 83 a hydraulic feed/drain oil passage of the brake B-3; characters S1 the sun gear of the gear unit-P1, as made integral with the external shaft; characters R1 the ring gear of the gear unit P1; characters C2 the carrier of the gear unit P2, as connected to the gear unit P1; and characters R2 the ring gear of the gear unit P2.

In the brake B-2 thus constructed, the friction members 28 and 29 of the frictional engagement element 2A are pushed and applied for establishing the 3rd speed by the piston 22, which is forced out while compressing the return spring 23 by the oil pressure of the working oil discharged from the not-shown hydraulic pump and fed, after regulated through the hydraulic control unit, from the hydraulic feed/drain oil passage 82 to the back of the piston 22 of the cylinder 21. The friction members 28 and 29 are released as the piston 22 is retracted by the return spring 23 when the oil pressure is discharged. In the brake B-3, on the other hand, the friction members 38 and 39 of the frictional engagement element 3A are pushed and applied for establishing the 2nd speed by the piston 32, which is forced out while compressing the return spring 33 by the oil pressure fed via a similar passage from the hydraulic feed/drain oil passage 83 to the back of the piston 32 of the cylinder 31. When the oil pressure is discharged, the friction members 38 and 39 are released as the piston 32 is retracted by the return spring when the oil pressure is discharged.

Thus, according to the automatic transmission of the embodiment described above, the piston 32 of one hydraulic servo unit 3B is not slidably supported at its outer and inner circumferences by the cylinder as in the annular piston of the prior art, but is constructed such that it is slidably supported by the cylinder at its two outer circumferences 321 and 322 having the different diameters. Thanks to this construction, the slidably supporting portions are arranged with axial displacement, to establish a sufficient space at the inner circumferential side of the piston-cylinder of the hydraulic servo unit 3B. This space makes it possible to arranged the gear units P1 and P2 from the inner circumference of the frictional engagement element 3A to the inner circumference of the hydraulic servo unit 38. In addition, arranging the two return springs 23 and 33 in the inner circumferential portion of one frictional engagement element 2A assists in retaining the positions of arrangement of the return springs. Thanks to the indivisibility of those constructions, the automatic transmission can be made compact especially in the axial direction.

Incidentally, the first and second return springs are made separate in the foregoing first embodiment. As shown in Fig. 6, however, the first return spring 23 and the second return spring 33 can be united to a common return spring 43, which has its one end connected to the first piston 22 by press-fitting it on the spring seat 231 fixed thereon by a snap ring and its other end connected to the second piston 32 by press-fitting it on the spring seat 331 fixed thereon by a snap ring. If this construction is adopted, it is possible not only to increase the effective length of the return spring 43 thereby to stabilize the spring characteristics but also to cause the connected portions of the return spring 43 to the two pistons 22 and 32, i.e., the spring seats 231 and 331 to function as reaction supporting members against the individual displacements of other connection portions. As a result, the construction can be so simplified as to eliminating the work of mounting the return spring 43 on the spring seats acting as the reaction support and on the second extension portion 316 so that the number of working steps can be reduced.

The present invention has been described in detail hereinbefore in connection with two embodiments and with modifications of the partial construction of one portion. However, the present invention can be more modified in its individual details within the scope of its claims.

## Claims

1. An automatic transmission comprising:
a first frictional engagement element (2A) and a second frictional engagement element (3A) juxtaposed in the axial direction;
a first hydraulic servo unit (2B) including a first cylinder (2A) having a side wall portion (211) interposed between said two frictional engagement elements (2A, 3A); and
a second hydraulic servo unit (3B) including a second cylinder (3I) having a side wall portion (311) interposed between said two frictional engagement elements (2A, 3A),
wherein said first cylinder (21) further has a first outer circumferential cylinder portion (212) extending from the outer circumference of the side wall portion (211) thereof toward said first frictional engagement element (2A), and a first inner circumferential cylinder portion (313) extending from the inner circumference thereof toward said first frictional engagement element (2A),
wherein said first hydraulic servo unit (2B) further includes: a first piston (22) having its inner and outer circumferences so slidably supported by the outer circumferential cylinder portion (212) and the first inner circumferential cylinder portion (313) of said first cylinder (21) as to slide in the axial direction thereby to push said first frictional engagement element (2A); and a first return spring (23) arranged in the inner circumference of said first frictional engagement element (2A) for pushing back said first piston (22),
wherein said second cylinder (3I) further has a second outer circumferential cylinder portion (312) extending from the outer circumference of the side wall portion (311) thereof toward said second frictional engagement element (3A), and an inner circumferential cylinder portion made common with said first inner circumferential cylinder portion (313), and
wherein said second hydraulic servo unit (3B) further includes: a second piston (32) having its larger-diameter outer circumferential portion (321) and a smaller-diameter outer circumferential portion (322) so slidably supported by the inner circumference of said second outer circumferential cylinder portion (312) and the inner circumference of said first inner circumferential cylinder portion (313) as to slide in the axial direction thereby to push said second frictional engagement element (3A); and a second return spring (33) arranged in the inner circumference of said first frictional engagement element (2A) for pushing back said second piston (32).

2. An automatic transmission according to claim 1, wherein said first inner circumferential cylinder portion (313) has a first extension portion (314) for supporting the inner circumference of said first piston (22), and a second extension portion (316) extending from said first extension portion (314) through a connection portion (315) to the inner circumference of said first frictional engagement ele-ment (2A), and wherein said first return spring (23) and said second return spring (33) are arranged around the outer circumference of said second extension portion (316).

3. An automatic transmission according to claim 1 or 2, wherein said first return spring (23) and said second return spring (33) are arranged to have their one ends connected back-to-back to said first inner circumferential cylinder portion (313), and wherein said first return spring (23) has its other end connected to said first piston (22) whereas said second return spring (33) has its other end connected to said second piston (32).

4. An automatic transmission according to claim 1 or 2, wherein said first return spring (23) and said second return spring (33) are united to have their one end connected to said first piston (22) and their other end connected to said second piston (32).

5. An automatic transmission according to any of the claims 1 to 4, wherein said second frictional engagement element (3A) is one which has a larger capacity than that of said first frictional engagement element (2A) so that it is applied at a lower gear stage than that of said first frictional engagement element (2A).

6. An automatic transmission according to any of claims 1 to 5, further comprising a first planetary gear unit (P1) and a second planetary gear unit (P2) arranged on the inner circumferential sides of said second frictional engagement element (3A) and said second hydraulic servo unit (3B).

7. An automatic transmission according to any of claims 2 to 6, further comprising a one-way clutch having its outer race connected to said first frictional engagement element (2A) being arranged in the inner circumference of said second extension portion (316).

## Patentansprüche

1. Automatikgetriebe mit:
einem ersten Reibeingriffselement (2A) und einem zweiten Reibeingriffselement (3A), die in Axialrichtung nebeneinander liegen;
einer ersten hydraulischen Servoeinheit (2B) mit einem ersten Zylinder (21) mit einem Seitenwandabschnitt (211), der zwischen die beiden Reibeingriffselemente (2A, 3A) eingefügt ist; und
einer zweiten hydraulischen Servoeinheit (3B) mit einem zweiten Zylinder (31) mit einem Seitenwandabschnitt (311), der zwischen die beiden Reibeingriffselemente (2A, 3A) eingefügt ist,
wobei der erste Zylinder (21) ferner einen ersten Außenumfangs-Zylinderabschnitt (212), der sich vom Außenumfang seines Seitenwandabschnitts (211) zum ersten Reibeingriffselement (2A) erstreckt, und einen ersten Innenumfangs-Zylinderabschnitt (313) hat, der sich von seinem Innenumfang zum ersten Reibeingriffselement (2A) erstreckt,
wobei die erste hydraulische Servoeinheit (2B) ferner aufweist: einen ersten Kolben (22), dessen Innen- und Außenumfang durch den Außenumfangs-Zylinderabschnitt (212) und den ersten Innenumfangs-Zylinderabschnitt (313) des ersten Zylinders (21) so gleitend gestützt werden, daß er in Axialrichtung gleitet, um dadurch das erste Reibeingriffselement (2A) zu schieben; und eine erste Rückstellfeder (23), die im Innenumfang des ersten Reibeingriffselements (2A) angeordnet ist, zum Zurückschieben des ersten Kolbens (22),
wobei der zweite Zylinder (31) ferner einen zweiten Außenumfangs-Zylinderabschnitt (312), der sich vom Außenumfang seines Seitenwandabschnitts (311) zum zweiten Reibeingriffselement (3A) erstreckt, und einen Innenumfangs-Zylinderabschnitt hat, der gemeinsam mit dem ersten Innenumfangs-Zylinderabschnitt (313) ausgebildet ist, und
wobei die zweite hydraulische Servoeinheit (3B) ferner aufweist: einen zweiten Kolben (32), dessen Außenumfangsabschnitt (321) mit größerem Durchmesser und Außenumfangsabschnitt (322) mit kleinerem Durchmesser durch den Innenumfang des zweiten Außenumfangs-Zylinderabschnitts (312) und den Innenumfang des ersten Innenumfangs-Zylinderabschnitts (313) so gleitend gestützt werden, daß er in Axialrichtung gleitet, um dadurch das zweite Reibeingriffselement (3A) zu schieben; und eine zweite Rückstellfeder (33), die im Innenumfang des ersten Reibeingriffselements (2A) angeordnet ist, zum Zurückschieben des zweiten Kolbens (32).

2. Automatikgetriebe nach Anspruch 1, wobei der erste Innenumfangs-Zylinderabschnitt (313) einen ersten Verlängerungsabschnitt (314) zum Stützen des Innenumfangs des ersten Kolbens (22) und einen zweiten Verlängerungsabschnitt (316) hat, der sich vom ersten Verlängerungsabschnitt (314) über einen Verbindungsabschnitt (315) zum Innenumfang des ersten Reibeingriffselements (2A) erstreckt, und wobei die erste Rückstellfeder (23) und die zweite Rückstellfeder (33) um den Außenumfang des zweiten Verlängerungsabschnitts (316) angeordnet sind.

3. Automatikgetriebe nach Anspruch 1 oder 2, wobei die erste Rückstellfeder (23) und die zweite Rückstellfeder (33) so angeordnet sind, daß ihre einen Enden Rücken an Rücken mit dem ersten Innenumfangs-Zylinderabschnitt (313) verbunden sind, und wobei bei der ersten Rückstellfeder (23) ihr anderes Ende mit dem ersten Kolben (22) verbunden ist, während bei der zweiten Rückstellfeder (33) ihr anderes Ende mit dem zweiten Kolben (32) verbunden ist.

4. Automatikgetriebe nach Anspruch 1 oder 2, wobei die erste Rückstellfeder (23) und die zweite Rückstellfeder (33) so vereinigt sind, daß ihr eines Ende mit dem ersten Kolben (22) verbunden ist und ihr anderes Ende mit dem zweiten Kolben (32) verbunden ist.

5. Automatikgetriebe nach einem der Ansprüche 1 bis 4, wobei das zweite Reibeingriffselement (3A) eines ist, das eine größere Kapazität als das erste Reibeingriffselement (2A) hat, so daß es in einer niedrigeren Getriebestufe als das erste Reibeingriffselement (2A) betätigt wird.

6. Automatikgetriebe nach einem der Ansprüche 1 bis 5, ferner mit einer ersten Planetenradeinheit (P1) und einer zweiten Planetenradeinheit (P2), die auf den Innenumfangsseiten des zweiten Reibeingriffselements (3A) und der zweiten hydraulischen Servoeinheit (3B) angeordnet sind.

7. Automatikgetriebe nach einem der Ansprüche 2 bis 6, ferner mit einer Freilaufkupplung, deren Außenring mit dem ersten Reibeingriffselement (2A) in Anordnung im Innenumfang des zweiten Verlängerungsabschnitts (316) verbunden ist.

## Revendications

1. Transmission automatique comportant :
un premier élément (2A) d'engagement par friction et un deuxième élément (3A) d'engagement par friction superposés dans la direction axiale;
une première unité hydraulique asservie (2B) comportant un premier cylindre (21) dont une partie (211) de la paroi latérale est intercalée entre lesdits deux éléments d'engagement par friction (2A, 3A); et
une deuxième unité hydraulique asservie (3B) comprenant un deuxième cylindre (31) dont une partie (311) de la paroi latérale est intercalée entre lesdits deux éléments d'engagement par friction (2A, 3A),
tandis que ledit premier cylindre (21) comporte en outre une première partie périphérique extérieure (212) de cylindre s'étendant depuis la circonférence extérieure de sa partie (211) de paroi latérale en direction du premier élément (2A) d'engagement par friction, et une première partie périphérique intérieure (313) de cylindre s'étendant depuis sa circonférence intérieure vers ledit premier élément (2A) d'engagement par friction,
tandis que ladite première unité hydraulique asservie (2B) comporte en outre ; un premier piston (22) dont la circonférence intérieure et la circonférence extérieure sont soutenues à coulissement par l'autre partie périphérique extérieure (212) de cylindre et la première partie périphérique intérieure (313) de cylindre du premier cylindre (21) de manière à coulisser dans la direction axiale, pour ainsi pousser ledit premier élément (2A) d'engagement par friction; et un premier ressort de rappel (23) agencé dans la circonférence intérieure dudit premier élément (2A) d'engagement par friction pour ramener ledit premier piston (22),
tandis que ledit deuxième cylindre (31) comporte en outre une deuxième partie périphérique extérieure (312) de cylindre s'étendant depuis la circonférence extérieure de sa partie (311) de paroi latérale vers ledit deuxième élément (3A) d'engagement par friction, et une partie périphérique intérieure de cylindre commune avec ladite première partie périphérique intérieure (313) de cylindre, et
tandis que ladite deuxième unité hydraulique asservie (38) comporte en outre : un deuxième piston (32) dont la partie périphérique extérieure de grand diamètre (321) et une partie périphérique extérieure de petit diamètre (322) sont soutenues à coulissement par la circonférence intérieure de ladite deuxième partie périphérique extérieure (312) de cylindre et la circonférence intérieure de ladite première partie périphérique intérieure (313) de cylindre de manière à coulisser dans la direction axiale, pour ainsi pousser ledit deuxième élément (3A) d'engagement par friction; et un deuxième ressort de rappel (33) agencé dans la circonférence intérieure dudit premier élément (2A) d'engagement par friction pour ramener ledit deuxième piston (32).

2. Transmission automatique selon la revendication 1, dans laquelle ladite première partie périphérique intérieure (313) de cylindre présente une première partie de prolongement (314) destinée à soutenir la circonférence intérieure dudit premier piston (22), et une deuxième partie de prolongement (316) s'étendant depuis ladite première partie de prolongation (314) par l'intermédiaire d'une partie de liaison (315), vers la circonférence intérieure dudit premier élément (2A) d'engagement par friction, et dans laquelle ledit premier ressort de rappel (23) et ledit deuxième ressort de rappel (33) sont agencés autour de la circonférence extérieure de ladite deuxième partie de prolongation (316).

3. Transmission automatique selon la revendication 1 ou 2, dans laquelle ledit premier ressort de rappel (23) et ledit deuxième ressort de rappel (33) sont agencés de manière à ce que leurs premiers extrémités soient reliées dos à dos à ladite première partie périphérique intérieure (313) de cylindre, et dans laquelle ledit premier ressort de rappel (23) à son autre extrémité reliée audit premier piston (22), tandis que ledit deuxième ressort de rappel (33) à son autre extrémité reliée audit deuxième piston (32).

4. Transmission automatique selon la revendication 1 ou 2, dans laquelle ledit premier ressort de rappel (23) et ledit deuxième ressort de rappel (33) sont agencés de manière à ce que l'une de leurs extrémités soient reliée audit premier piston (22) et que leur autre extrémité soit reliée audit deuxième piston (32).

5. Transmission automatique selon l'une quelconque des revendications 1 à 4, dans laquelle ledit deuxième élément (3A) d'engagement par friction est un élément dont la capacité est supérieure à celle dudit premier élément (2A) d'engagement par friction, de sorte qu'il est appliqué à un rapport de transmission plus bas que celui dudit premier élément (2A) d'engagement par friction.

6. Transmission automatique selon l'une quelconque des revendications 1 à 5, comportant en outre une première unité (P1) d'engrenages à planétaires et une deuxième unité (P2) d'engrenages à planétaires agencées sur les côtés périphériques intérieurs dudit deuxième élément (3A) d'engagement par friction et de ladite deuxième unité hydraulique asservie (38).

7. Transmission automatique selon l'une quelconque des revendications 2 à 6, comportant en outre un embrayage unidirectionnel dont la course extérieure est reliée audit premier élément (2A) d'engagement par friction agencé dans la circonférence intérieure de ladite deuxième partie de prolongation (316).
